# EUROPEAN PATENT APPLICATION

(11) **EP 3 689 610 A1**
(43) Date of publication of application: **05.08.2020**
(21) Application number: 19154484.0
(22) Date of filing: 30.01.2019
(51) Int. Cl.: B33Y 70/00, B22F 3/105, C04B 35/56, C22C 29/06, C22C 29/10, C22C 29/16, B33Y 10/00, B23K 35/30, B23K 35/32, B23K 35/02, B23P 6/00

(54) **MAX PHASE POWDER WITH A BRAZE MATERIAL AND METHOD**

(71) Applicant: Siemens Aktiengesellschaft, 80333 München (DE)
(72) Inventor: Kamel, Ahmed, Orlando, 32832 (US); Stöhr, Britta, 14059 Berlin (DE)

(57) **Abstract**

By a mixture of a MAX phase with a nickel-based braze alloy with a good weldability is reached.

## Description

The invention relates to a MAX phase powder with the addition of a braze to improve the weld ability and a method.

MAX phases are a class of materials with properties between those of ceramics and metals. Due to their combination of properties (high thermal and electrical conductivity, damage tolerant, resistant to thermal shocks, machinability, oxidation and corrosion resistant, low density, low CTE) they are very attractive as hot section turbine materials. Currently, Nb₂AlC, Cr₂AlC and Ti₂AlC as typical MAX phases are investigated with regard to their mechanical properties, coating behavior and processability via LMD (laser metal deposition). First trials with Nb₂AlC have shown that the energy impact during LMD is too high which results in an irreversible decomposition of the MAX-phase (formation of NbC and AlC). Thus, LMD is not applicable without modifications of the MAX phase powder.

MAX phases are not yet established in any component, so processes for these materials have not yet been developed.

It is therefore the aim of the invention to overcome the above-mentioned problem.

The problem is solved by a MAX phase powder mixture and a method according to claim 1 or 2.

In the independent claims further advantages are listed which can be combined arbitrarily with each other to yield further advantages.

It is proposed to mix a MAX phase material with a high temperature braze alloy and reduce the power input during the LMD process. The power of the preferably used laser can be preferably reduced to 160W or below and the process could be done with a defocused beam. The temperature during the process must be adapted in the range of 1473K to make sure that the braze is liquid. It has been shown, that high temperature brazes can be applied via LMD. Also, Nb₂AlC is sintered at temperatures up to 1873K without any degradation of the material.

The amount of the braze alloy in the MAX phase powder mixture can be varied between 10wt% - 50wt% depending on processability and resulting mechanical properties.

As an alternative route polymer are proposed as additive material during LMD. These polymers would allow further reduced process temperatures and could be burned-out afterwards.

Thus, if MAX phases proved their applicability as high temperature materials, standard processes such as LMD, brazing, machining, etc. are extremely important for new parts but also for service applications. MAX phase powder with improved weldability will then be very important. The following advantages can be expected:
- Increase of repair scope -> service upgrades
- Extended lifetime of high temperature components.

The braze alloy is preferably a cobalt or nickel-based alloy with the alloying elements Chromium (Cr), Cobalt (Co), Aluminum (Al) and optionally Tantalum (Ta) and/or Titanium (Ti) and/or Molybdenum (Mo) and/or Hafnium (Hf) and/or Tungsten (W) and optionally melting depressants like Boron (B) or Silicon (Si) and optionally with the addition of Yttrium (Y).

The composition of a preferable braze alloy is Ni-14Cr-10Co-3,5Al-2,5Ta-2,75B-0,05Y (in wt%).

The braze alloy comprises for the Max phase powder mixture (in wt%), preferably especially consists of:

| | |
|---|---|
| Nickel (Ni) | 40.0% - 70.0% |
| Chromium (Cr) | 8.0% - 23.0% |
| Cobalt (Co) | 5.0% - 20.0% |
| Aluminum (Al) | 1.0% - 10.0% |
| Boron (B) | 0.5% - 4.00% |
| optionally | |
| Tantalum (Ta) | 1.0% - 4.0% |
| Molybdenum (Mo) | 0.0% - 5.0% |
| Hafnium (Hf) | 0.05% - 0.09% |
| Tungsten (W) | 2.0% - 10.0% |
| Titan (Ti) | 0.5% - 5.0% |
| especially | |
| no Yttrium (Y), | |
| and/or no Rhenium (Re), | |
| and/or no Carbon (C). | |

MAX-phases comprise hexagonal carbides or nitrides with the general formula Mₘ₊₁AXₙ wherein n is between 1 and 3. M is an early transition metal as Scandium (Sc), Titan (Ti), Vanadium (V), Chromium (Cr), Zirconium (Zr), Niob (Nb), Molybdenum (Mo), Hafnium (Hf) and/or Tantalum (Ta). A is an A-group metal, means most elements of IIIa und IVa or group 13 and 14 elements, for example Aluminum (Al), Silicon (Si), Phosphor (P), Sulfur (S), Gallium (Ga), Germanium (Ge), Arsen (As), Cadmium (Cd), Indium (In), Tin (Sn), Tellur (Te), Plumbum (Pb) and X is Carbon (C) or Nitrogen (N).

Preferably the phases Cr₂AlC, Mo₂AlC, Zr₂AlC, Nb₂AlC, Ti₃SiC₂, Ti₃AlC₂, Ti₃AlC will be used.

By the high content of Aluminum (Al) and Chromium (Cr) a big reservoir is present for the formation of protective oxidation layers.

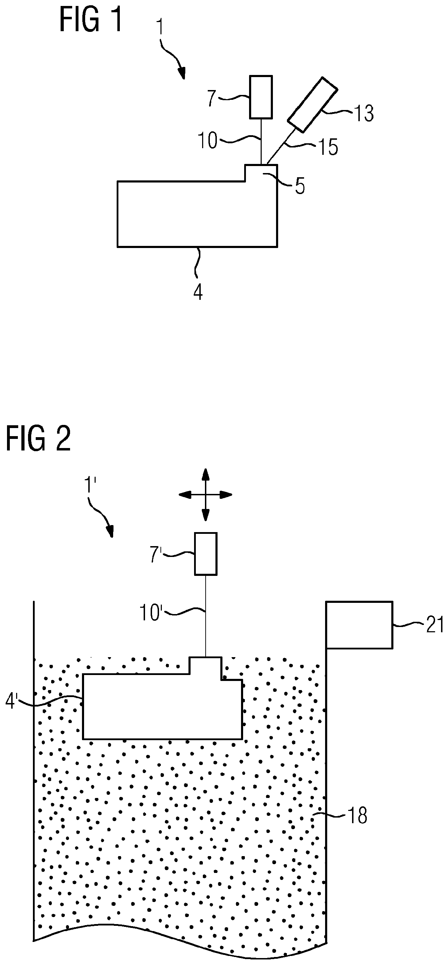

Figure 1 show a first example of a method wherein the inventive MAX phase powder is used.

The arrangement 1 shows a metallic substrate 4, wherein for an area 5 the addition of material 15 is necessary. The arrangement 1 shows a laser 7 which sends a laser beam 10 which melts the inventive MAX phase powder mixture which is provided by a nozzle 13.

Any energy beam, e.g. electron beam can be used instead of the laser.

In Figure 2 the schematic arrangement 1' of a further additive manufacture method is shown. A substrate 4' is provided in a powder bed 18 or the arrangement 1' is used to completely build up a new component which is here partly already derived the part 4'. By a laser 7' a laser beam 10' is provided which selectively melts the inventive MAX phase powder mixture in the powder bed 18 wherein new powder is provided by a powder provider 21.

## Claims

1. MAX phase powder mixture,
at least comprising:,
especially consisting of:
at least one MAX phase
especially only one MAX phase and
a nickel-based or cobalt-based braze alloy,
especially a nickel-based braze alloy,
which has a melting point lower than the at least one MAX phase,
especially at least 10K lower,
very especially at least 20K lower,
than the melting point of the at least one MAX phase.

2. Method to build up a new component or to repair a component (4, 4'),
wherein a powder mixture of claim 1 is used,
especially by powder welding,
very especially by laser powder welding or
by any additive manufacturing process,
especially by selective laser melting (SLM) or selective laser sintering (SLS).

3. MAX phase powder mixture or method according to claim 1 or 2,
wherein the braze alloy comprises at least:,
especially consists of:
Nickel (Ni), Chromium (Cr), Cobalt (Co), Aluminum (Al) and optionally
Tantalum (Ta) and/or Titanium (Ti) and/or Boron (B) and/or
Molybdenum (Mo) and/or Hafnium (Hf) and/or Tungsten (W) and/or Silicon (Si) and/or Yttrium (Y).

4. Powder mixture or method according to any of the claims 1, 2 or 3,
wherein the amount of the braze alloy in the MAX phase powder mixture is between 10% to 50% (in wt%).

5. Method according to any of the claims 2, 3 or 4,
wherein the power of the laser is below 160W.

6. Method according to any of the claims 2, 3, 4 or 5,
wherein a defocused laser beam is used.

7. Max phase powder mixture or method according to any of the claims 1 to 6,
wherein the braze alloy comprises (in wt%),
especially consists of (in wt%):
| | |
|---|---|
| Nickel (Ni) | 40.0% - 70.0% |
| Chromium (Cr) | 8.0% - 23.0% |
| Cobalt (Co) | 5.0% - 20.0% |
| Aluminum (Al) | 1.0% - 10.0% |
| Boron (B) | 0.5% - 4.00% |
| optionally | |
| Tantalum (Ta) | 1.0% - 4.0% |
| Molybdenum (Mo) | 0.0% - 5.0% |
| Hafnium (Hf) | 0.05% - 0.09% |
| Tungsten (W) | 2.0% - 10.0% |
| Titanium (Ti) | 0.5% - 5.0% |
| especially | |
| no Yttrium (Y), | |
| and/or no Rhenium (Re), | |
| and/or no Carbon (C). | |

8. Max phase powder mixture or method according to any of the claims 1 to 7,
wherein the braze alloy comprises:
especially consists of:
Ni-14Cr-10Co-3,5A1-2,5Ta-2,75B-0,05Y (in wt%).

9. Max phase powder mixture or method according to any of the claims 1 to 8,
wherein the MAX phases Cr₂AlC, Mo₂AlC, Zr₂AlC, Nb₂AlC, Ti₃SiC₂, Ti₃AlC₂ and/or Ti₃AlC are used.

10. Method according to any of the preceding claim 1 to 9, wherein polymer is used as an additive, which allows further reduced process temperatures.
